# EUROPÄISCHE PATENTSCHRIFT

(11) **EP 3 686 048 B1**
(45) Veröffentlichungstag und Bekanntmachung des Hinweises auf die Patenterteilung: **21.09.2022**
(21) Anmeldenummer: 20000007.3
(22) Anmeldetag: 09.01.2020
(51) Int. Cl.: B60L 53/18, B60L 53/302, H01B 7/00, H01B 7/42, H01R 13/00, H01B 9/00, B60L 53/16, H01R 13/58

(54) **ZUGENTLASTUNG FÜR EINEN KABELSCHLAUCH**
STRAIN RELIEF FOR A CABLE HOSE
PROTECTEUR POUR UNE GAINE DE CÂBLE

(30) Priorität: 28.01.2019 DE 102019101979
(43) Veröffentlichungstag der Anmeldung: 29.07.2020
(73) Patentinhaber: HARTING Automotive GmbH, 32339 Espelkamp (DE)
(72) Erfinder: Beimdieck, Carsten, 49477 Ibbenbüren (DE); Frerking, Malte, 49448 Brockum (DE); Bruland, Alexander, 32369 Rahden (DE)

(56) Entgegenhaltungen:
- EP-A1- 0 663 101
- EP-A1- 2 112 721
- EP-A1- 3 103 173
- EP-A1- 3 362 312
- EP-B1- 3 103 173
- WO-A1-2017/064157
- DE-A1- 3 137 067
- DE-A1- 3 820 741
- US-A1- 2009 167 078
- US-A1- 2018 170 196
- US-B1- 6 396 241
- US-B2- 9 257 857

## Beschreibung

### Beschreibung

Die Erfindung geht aus von einem System bestehend aus einem Kabelschlauchabgang und einem Kabelschlauch nach der Gattung des unabhängigen Anspruchs 1. Weiterhin geht die Erfindung aus von einem Autoladesteckverbinder oder einer Ladesäule gemäß des nebengeordneten Anspruchs 7.

Kabelschläuche werden insbesondere bei Autoladesteckverbinder, die speziell für einen schnellen Ladevorgang ausgestaltet sind. In den Kabelschläuchen verlaufen die für einen Ladevorgang notwendigen Leitungen.

### Stand der Technik

Die DE 10 2017 108 174 A1 zeigt einen Autoladesteckverbinder für ein Elektrofahrzeug. Derartige Autoladesteckverbinder werden mit elektrischen Leitungen mit einem großen Durchmesser versehen, um die für den Ladevorgang notwendigen Ströme übertragen zu können.

Die in EP 2 112 721 A1 gezeigte Steckerverbindung ist für Hochspannungskabel von Elektro- und Hybridfahrzeugen bestimmt, und schließt einen Stecker mit Aufnahmebuchse ein, in welche die Kabellitze des Hochspannungskabels eingesteckt wird. Die Stecker-Buchsenverbindung wird von außen zur Abdichtung komplett mit einem thermoplastischen Elastomer umspritzt.

Die EP 3 103 173 A1 zeigt ein Ladesystem für ein elektrisches Fahrzeug, umfassend: Eine Stromversorgung; ein Kabel, das ein erstes und ein zweites Ende aufweist, wobei das erste Ende an der Stromversorgung angebracht ist, wobei das Kabel eine Ladeleitung und eine Kühlrohrleitung umfasst, die sich jeweils von dem ersten Ende zu dem zweiten Ende erstrecken; und einen Verbinder, der an dem zweiten Ende des Kabels angebracht ist.

Die EP 3 362 312 A1 zeigt ein Kabel für einen Autoladesteckverbinder. Ein derartiges Kabel umfasst einen Kabelschlauch, der einen Schlauchinnenraum einfasst, zumindest eine in dem Schlauchinnenraum erstreckte Leitungsader zum Leiten eines elektrischen Stroms und eine in dem Schlauchinnenraum erstreckte Fluidleitung zum Führen eines Fluids zum Kühlen des Kabels.

Die US 6 396 241 B1 zeigt einen Ladesteckverbinder zum induktiven Laden eines Elektrofahrzeugs.

Die US 9 257 857 B2 zeigt eine Kabelverschraubung mit einem speziellen Kabelpositionierungsmittel.

Aus der DE 10 2016 112 306 A1 geht hervor, dass Autoladesteckverbinder über geeignete Leitungen mit Kühlflüssigkeit versorgt werden können, um die beim Ladevorgang entstehende Wärme schnell abzutransportieren und damit den Ladevorgang zu beschleunigen;

Die unterschiedlichen Leitungen werden in einem Kabelschlauch zusammengefasst. Durch ein häufiges Verbiegen des Kabelschlauchs bei wechselnden Ladevorgängen, können sich einzelne Leitungen im Kabelschlauch verdrehen und sich gegenseitig negativ beeinflussen. Im schlimmsten Fall können sich Leitungen, durch starke mechanische Beanspruchung, von einem Kontaktelement lösen.

### Aufgabenstellung

Die Aufgabe der Erfindung besteht darin, einen zuverlässigen Autoladesteckverbinder vorzuschlagen.

Die Aufgabe wird durch die Merkmale des unabhängigen Anspruchs 1 gelöst. Weiterhin wird diese Aufgabe durch die Merkmale des nebengeordneten Anspruchs 7 gelöst.

Vorteilhafte Ausgestaltungen der Erfindung sind in den Unteransprüchen angegeben.

Das erfindungsgemäße System besteht aus einem Kabelschlauchabgang und einem daran angebrachten Kabelschlauch. Der Kabelschlauchabgang ist an einem Ladesteckverbinder angeformt. Alternativ ist der Kabelschlauchabgang an einer Ladesäule angebracht. In diesem Fall handelt es sich beim Kabelschlauchabgang vorzugsweise um ein separates Teil, welches im Gehäuse der Ladesäule befestigt ist.

In dem Kabelschlauch befinden sich elektrische Leitungen und/oder optische Leitungen und/oder kühlflüssigkeitsführende Leitungen, die beispielsweise von einer Ladesäule zu einem Ladesteckverbinder verlaufen.

Innerhalb des Kabelschlauches ist ein Leiteraufnahmeelement angeordnet. Das Leiteraufnahmeelement weist Aufnahmen auf, in denen die Leitungen zumindest bereichsweise angeordnet sind.

Der Kabelschlauch weist außenseitig einen Klemmring auf. Der Klemmring ist im Bereich des Leiteraufnahmeelements angeordnet. Über den Klemmring wird eine Kraft in radialer Richtung auf den Mantel des Kabelschlauches ausgeübt, wodurch der Kabelschlauch auf das Leiteraufnahmeelement gepresst ist.

Zumindest ein Teil des Kabelschlauches verläuft innerhalb des zylinderförmigen Kabelschlauchabgangs. Es handelt sich dabei um den sogenannten Endabschnitt des Kabelschlauches, der entweder an den Autoladesteckverbinder oder an der zugehörigen Ladestation angeschlossen wird. Der in den Kabelschlauchabgang eingeschobene Teil des Kabelschlauches weist den Klemmring auf. Der Klemmring ist in einer innenseitigen Ausnehmung des Kabelschlauchabgangs angeordnet. Über den in der Ausnehmung befindlichen Klemmring werden an den Kabelschlauch bzw. an den Leitungen angreifende Zugkräfte abgefangen.

Das Leiteraufnahmeelement weist eine im Wesentlichen zylinderförmige Grundform auf. In der Mantelfläche des Leiteraufnahmeelements verlaufen in axialer Richtung Aufnahmen für die Leitungen. Bei den Aufnahmen handelt es sich um Aussparungen mit einem teilkreisförmigen Querschnitt. Der Querschnittsradius der Aussparungen ist an den Durchmesser bzw. an den Querschnittsradius der zugehörigen Leitung angepasst.

Vorteilhafterweise sind die Aufnahmen rotationssymmetrisch im Leiteraufnahmeelement angeordnet. Dadurch wird eine Verdrehung der Leiter im Kabelschlauch verhindert.

Es ist vorteilhaft, wenn der Außendurchmesser des Leiteraufnahmeelements nur geringfügig kleiner ist als der Innendurchmesser des Kabelschlauches. Dadurch wird eine so genannte Auffaltung des Kabelschlauches beim oben beschriebenen Verpressen durch den Klemmring verhindert.

Vorteilhafterweise weist der Kabelschlauchabgang eine Dichtung auf, die endseitig am Kabelschlauchabgang angeordnet ist. Die Dichtung schützt das System vor ein Eindringen von Medien wie Staub und Wasser. Gleichzeitig bietet die Dichtung einen Knick- bzw. Biegeschutz für den Kabelschlauch, da dieser insbesondere am Ende des Kabelschlauchabgangs anfällig für mechanische Belastungen ist.

Vorzugsweise weist die Dichtung einen außenseitig umlaufenden Steg auf, welcher in einer innenliegenden Nut des Kabelschlauchabgangs angeordnet ist. Dadurch wird die Dichtung verliersicher am Kabelschlauchabgang gehalten.

### Ausführungsbeispiel

Ein Ausführungsbeispiel der Erfindung ist in den Zeichnungen dargestellt und wird im Folgenden näher erläutert. Es zeigen:
- Fig. 1: eine Seitenansicht eines teilweise geöffneten Autoladesteckverbinders,
- Fig. 2: einen Ausschnitt eines Schlauchanschlussbereichs des teilweise geöffneten Autoladesteckverbinders,

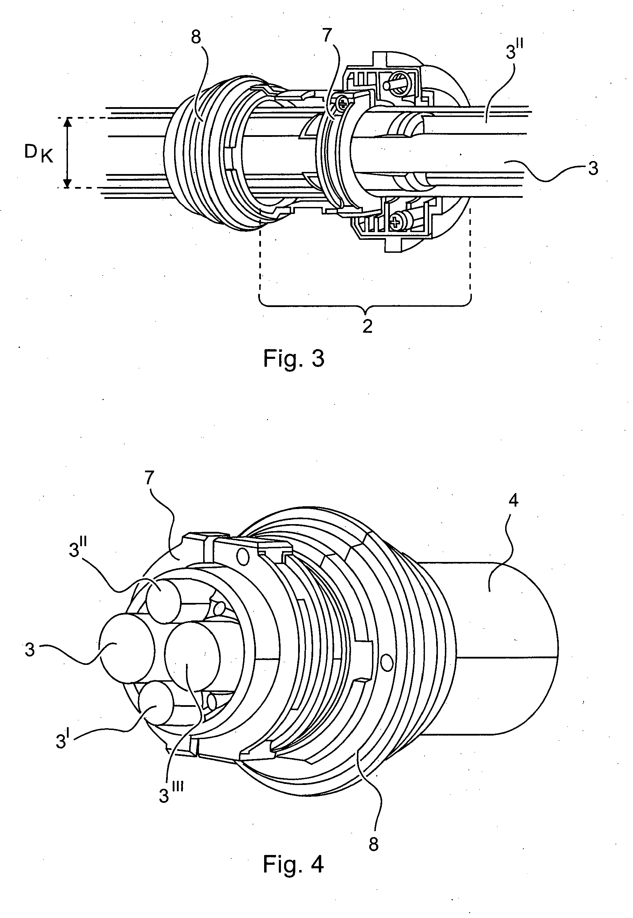

- Fig. 3: eine perspektivische Darstellung eines teilweise geöffneten Kabelschlauches mit einem teilweise geöffneten Kabelschlauchabgang,
- Fig. 4: perspektivische Darstellung eines Kabelschlauchabschnitts mit darin verlaufenden Leitungen,

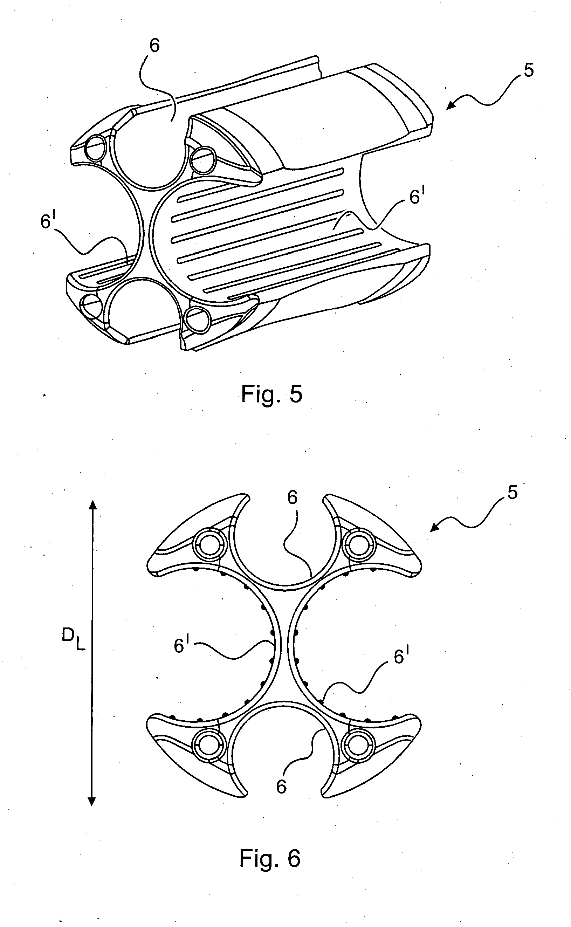

- Fig. 5: eine perspektivische Darstellung eines Leiteraufnahmeelements und
- Fig. 6: eine Draufsicht des Leiteraufnahmeelements.

Die Figuren enthalten teilweise vereinfachte, schematische Darstellungen. Zum Teil werden für gleiche, aber gegebenenfalls nicht identische Elemente identische Bezugszeichen verwendet. Verschiedene Ansichten gleicher Elemente könnten unterschiedlich skaliert sein.

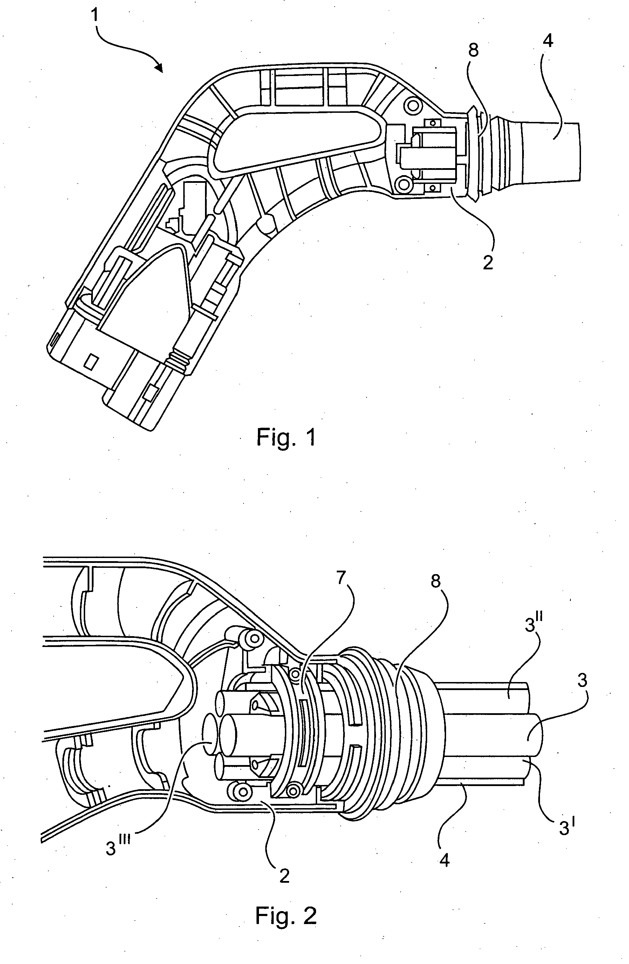

In Figur 1 ist eine Seitenansicht eines Autoladesteckverbinders 1 zu sehen, dessen Gehäuse teilweise geöffnet dargestellt ist. Der Autoladesteckverbinder 1 weist einen Kabelschlauchabgang 2 auf, über welchen die am Autoladesteckverbinder 1 angeschlossenen Leitungen 3, 3', 3", 3‴ in das Gehäuse geführt werden. Die Leitungen 3, 3', 3", 3‴ werden an die Kontaktelemente (nicht gezeigt) des Autoladesteckverbinder 1 angeschlossen. Die Leitungen 3, 3', 3", 3‴ können stromführend sein oder den Autoladesteckverbinder 1 mit Kühlflüssigkeit versorgen. Die Funktionsweise des Autoladesteckverbinders 1 ist nicht erfindungsrelevant und wird daher im Folgenden auch nicht näher beschrieben.

Die Leitungen 3, 3', 3", 3‴ verlaufen in einem Kabelschlauch 4, der teilweise in den Kabelschlauchabgang 2 hineinragt. Die Leitungen 3, 3', 3", 3‴ sind in Aufnahmen 6 eines Leiteraufnahmeelement 5 angeordnet. Das Leiteraufnahmeelement 5 ist wiederum im Kabelschlauch 4 angeordnet. Die Aufnahmen 6 haben einen teilkreisförmigen Querschnitt, dessen Radius an den Querschnitt der jeweiligen Leitung 3, 3', 3", 3‴ angepasst ist.

Der Außendurchmesser D_{L} des Leiteraufnahmeelements 5 ist nur geringfügig kleiner als der Innendurchmesser D_{K} des Kabelschlauches 4. Man könnte auch sagen, dass der Außendurchmesser D_{L} des Leiteraufnahmeelements 5 an den Innendurchmesser D_{K} des Kabelschlauches 4 angepasst sind. Dadurch kann das Leiteraufnahmeelement 5 in den Kabelschlauch 4 eingeführt werden, ohne dass ein anschließendes Verrutschen befürchtet werden muss.

Im Bereich des Leiteraufnahmeelements 5 ist außenseitig am Kabelschlauch 4 ein Klemmring 7 vorgesehen. Der Klemmring 7 übt eine radiale Kraft auf den Außenmantel des Kabelschlauches 4 aus. Dadurch wird die Innenseite des Kabelschlauches 4 auf das Leiteraufnahmeelement 5 gepresst.

In Figur 2 ist zu erkennen, dass der auf den Kabelschlauch 4 gepresste Klemmring 7 in einer Ausnehmung des Kabelschlauchabgangs 2 angeordnet ist. Dadurch werden die an dem Kabelschlauch 4 wirkenden Zugkräfte abgefangen.

Endseitig ist am Kabelschlauchabgang 2 eine Dichtung 8 angeordnet. Die äußere Form der Dichtung 8 verjüngt sich trichterförmig in Kabelabgangsrichtung. Der Durchmesser der Durchgangsöffnung der Dichtung 8 ist an den Außenradius des Kabelschlauches 4 angepasst. Die Dichtung 8 bietet, neben ihrer Abdichtfunktion gegen das Eindringen von Medien, auch einen so genannten Knickschutz für den Kabelschlauch 4.

Auch wenn in den Figuren verschiedene Aspekte oder Merkmale der Erfindung jeweils in Kombination gezeigt sind, ist für den Fachmann - soweit nicht anders angegeben - ersichtlich, dass die dargestellten und diskutierten Kombinationen nicht die einzig möglichen sind. Insbesondere können einander entsprechende Einheiten oder Merkmalskomplexe aus unterschiedlichen Ausführungsbeispielen miteinander ausgetauscht werden.

### Bezugszeichenliste

- 1: Autoladesteckverbinder
- 2: Kabelschlauchabgang
- 3: Leitungen
- 4: Kabelschlauch
- 5: Leiteraufnahmeelement
- 6: Aufnahme
- 7: Klemmring
- 8: Dichtung

- D_{L}: Außendurchmesser des Leiteraufnahmeelements 5
- D_{K}: Innendurchmesser des Kabelschlauches 4

## Patentansprüche

1. System bestehend aus einem
- Kabelschlauchabgang (2), welcher an einem Autoladesteckverbinder (1) angeformt oder an einer Ladesäule angebracht ist und
- einem Kabelschlauch (4) zur Aufnahme von Leitungen (3, 3', 3", 3‴),
- wobei innerhalb des Kabelschlauches (4) ein Leiteraufnahmeelement (5) angeordnet ist, welches Aufnahmen (6) für die Leitungen (3, 3', 3", 3‴) aufweist, wobei das Leiteraufnahmeelement (5) eine im Wesentlichen zylinderförmige Grundform aufweist und im Leiteraufnahmeelement (5) axial verlaufende Aufnahmen (6, 6') für die Leitungen (3, 3', 3", 3‴) vorgesehen sind
**dadurch gekennzeichnet,**
- **dass** der Kabelschlauch (4) außenseitig einen Klemmring (7) aufweist, der im Bereich des Leiteraufnahmeelements angeordnet ist [§12, 24 & Fig. 21 und eine radiale Kraft auf den Kabelschlauch (4) ausübt, wodurch der Kabelschlauch (4) auf das Leiteraufnahmeelement (5) gepresst ist,
- **dass** zumindest ein Teil des Kabelschlauches (4) innerhalb des Kabelschlauchabgangs (2) verläuft und
- **dass** der Klemmring (7) in einer Ausnehmung innerhalb des Kabelschlauchabgangs (2) angeordnet ist und dass der Kabelschlauchabgang (2) eine Dichtung (8) aufweist, die endseitig am Kabelschlauchabgang angeordnet ist und das System vor ein Eindringen von Medien wie Staub und Wasser schützt.

2. System nach vorstehendem Anspruch
**dadurch gekennzeichnet, dass**
die Aufnahmen (6, 6') rotationssymmetrisch angeordnet sind.

3. System nach Anspruch 1
**dadurch gekennzeichnet, dass**
es sich bei den Aufnahmen (6, 6') um Aussparungen mit einem teilkreisförmigen Querschnitt handelt.

4. System nach einem der vorstehenden Ansprüchen
**dadurch gekennzeichnet, dass**
der Außendurchmesser (D_{L}) des Leiteraufnahmeelements (5) an den Innendurchmesser (D_{K}) des Kabelschlauches (4) angepasst ist.

5. System nach Anspruch 1
**dadurch gekennzeichnet, dass**
die Dichtung (8) einen außenseitig umlaufenden Steg aufweist, welcher in einer innenliegenden Nut des Kabelschlauchabgangs (2) angeordnet ist.

6. System nach einem der vorstehenden Ansprüche
**dadurch gekennzeichnet, dass**
es sich bei den Leitungen (3, 3', 3", 3‴) um elektrische Leitungen und/oder optische Leitungen und/oder kühlflüssigkeitsführende Leitungen handelt.

7. Autoladesteckverbinder oder Ladesäule mit einem System nach einem der vorstehenden Ansprüche.

## Claims

1. System consisting of a
- cable conduit outlet (2) which is moulded on a car charging plug-in connector (1) or is attached to a charging station, and
- a cable conduit (4) for receiving lines (3, 3', 3", 3"'),
- a conductor receptacle element (5) being arranged within the cable conduit (4), which conductor receptacle element (5) has receptacles (6) for the lines (3, 3', 3", 3‴), the conductor receptacle element (5) having a substantially cylindrical basic shape, and receptacles (6, 6') which run axially in the conductor receptacle element (5) being provided for the lines (3, 3', 3", 3‴),
**characterized**
- **in that** the cable conduit (4) has, on the outer side, a clamping ring (7) which is arranged in the region of the conductor receptacle element [§12, 24 and Fig. 21] and exerts a radial force on the cable conduit (4), by way of which the cable conduit (4) is pressed onto the conductor receptacle element (5) ,
- in that at least one part of the cable conduit (4) runs within the cable conduit outlet (2), and
- **in that** the clamping ring (7) is arranged in a recess within the cable conduit outlet (2), and in that the cable conduit outlet (2) has a seal (8) which is arranged on the end side of the cable conduit outlet and protects the system against a penetration of media such as dirt and water.

2. System according to the preceding claim, **characterized in that** the receptacles (6, 6') are arranged in a rotationally symmetrical manner.

3. System according to Claim 1, **characterized in that** the receptacles (6, 6') are cut-outs with a partially circular cross section.

4. System according to one of the preceding claims, **characterized in that** the external diameter (D_{L}) of the conductor receptacle element (5) is adapted to the internal diameter (D_{K}) of the cable conduit (4).

5. System according to Claim 1, **characterized in that** the seal (8) has a web which runs around the outer side and is arranged in an inner groove of the cable conduit outlet (2).

6. System according to one of the preceding claims, **characterized in that** the lines (3, 3', 3", 3‴) are electric lines and/or optical lines and/or lines which conduct cooling fluid.

7. Car charging plug-in connector or charging station with a system according to one of the preceding claims.

## Revendications

1. Système constitué par
- une sortie de tuyau de câble (2), qui est formée sur un connecteur enfichable de charge de voiture (1) ou disposée sur une colonne de charge, et
- un tuyau de câble (4) pour recevoir des conducteurs ('3, 3', 3", 3‴),
- un élément de réception de conducteurs (5) étant agencé à l'intérieur du tuyau de câble (4), lequel présente des logements (6) pour les conducteurs (3, 3', 3", 3‴), l'élément de réception de conducteurs (5) présentant une forme de base essentiellement cylindrique et des logements (6, 6') s'étendant axialement dans l'élément de réception de conducteurs (5) étant prévus pour les conducteurs (3, 3', 3", 3‴),
**caractérisé en ce que**
- le tuyau de câble (4) présente sur le côté extérieur une bague de serrage (7), qui est agencée dans la zone de l'élément de réception de conducteurs [§12, 24 & Fig. 21] et exerce une force radiale sur le tuyau de câble (4), par laquelle le tuyau de câble (4) est pressé sur l'élément de réception de conducteurs (5) ,
- au moins une partie du tuyau de câble (4) s'étend à l'intérieur de la sortie de tuyau de câble (2) et
- la bague de serrage (7) est agencée dans un évidement à l'intérieur de la sortie de tuyau de câble (2) et la sortie de tuyau de câble (2) présente un joint d'étanchéité (8), qui est agencé à l'extrémité de la sortie de tuyau de câble et qui protège le système contre la pénétration de milieux tels que la poussière et l'eau.

2. Système selon la revendication précédente, **caractérisé en ce que** les logements (6, 6') sont agencés de manière symétrique en rotation.

3. Système selon la revendication 1, **caractérisé en ce que** les logements (6, 6') consistent en des évidements ayant une section transversale partiellement circulaire.

4. Système selon l'une quelconque des revendications précédentes, **caractérisé en ce que** le diamètre extérieur (D_{L}) de l'élément de réception de conducteurs (5) est adapté au diamètre intérieur (D_{K}) du tuyau de câble (4).

5. Système selon la revendication 1, **caractérisé en ce que** le joint d'étanchéité (8) présente une nervure périphérique extérieure, qui est agencée dans une rainure intérieure de la sortie de tuyau de câble (2).

6. Système selon l'une quelconque des revendications précédentes, **caractérisé en ce que** les conducteurs (3, 3', 3", 3‴) consistent en des conducteurs électriques et/ou des conducteurs optiques et/ou des conducteurs transportant du liquide de refroidissement.

7. Connecteur enfichable de charge de voiture ou colonne de charge comprenant un système selon l'une quelconque des revendications précédentes.
